(19) Europäisches Patentamt
European Patent Office
Office européen des brevets

(11) EP 1 566 418 A1

(12) **EUROPEAN PATENT APPLICATION**
published in accordance with Art. 158(3) EPC

(43) Date of publication:
**24.08.2005 Bulletin 2005/34**

(21) Application number: **03811933.5**

(22) Date of filing: **26.11.2003**

(51) Int Cl.7: **C09D 183/08**, C09D 183/06, C09D 183/14, G02B 1/10

(86) International application number:
**PCT/JP2003/015106**

(87) International publication number:
**WO 2004/048487 (10.06.2004 Gazette 2004/24)**

(84) Designated Contracting States:
**AT BE BG CH CY CZ DE DK EE ES FI FR GB GR HU IE IT LI LU MC NL PT RO SE SI SK TR**

(30) Priority: **27.11.2002 JP 2002343453**

(71) Applicant: **NIPPON ARC CO., LTD.**
**Chiba 299-0107 (JP)**

(72) Inventor: **KAYANOKI, Hisayuki,**
**Nippon ARC Co., Ltd.**
**Ichihara-shi, Chiba 299-0107 (JP)**

(74) Representative: **Cresswell, Thomas Anthony**
**J.A. KEMP & CO.**
**14 South Square**
**Gray's Inn**
**London WC1R 5JJ (GB)**

# (54) COATING COMPOSITION AND COATED PLASTIC LENSES

(57) A coating composition comprising (A) 0.05 to 7 % by mass of a fluoro group-containing silicon compound or a hydrolysate thereof, (B) 5 to 65 % by mass of fine particles of the oxide of at least one metal selected from the group consisting of Si, Al, Sn, Sb, Ta, Ce, La, Fe, Zn, W, Zr, In and Ti, (C) 10 to 80 % by mass of a specific silicon compound or a partial hydrolysate thereof, and (D) 0.1 to 60 % by mass of a compound which can react with an epoxy group or a silanol group, wherein

the amount of the component (A) is based on the mass of the component (C), and the amounts of the components (B), (C) and (D) are based on the total mass of the components (A), (B), (C) and (D).

This composition provides to a plastic lens a hard coat layer which is free from a dyeing speck even when it is dyed after it is stored for a long period of time, experiences a small change in the color of a dye before and after storage, can be dyeable and has high hardness.

EP 1 566 418 A1

## Description

### Field of the Invention

The present invention relates to a coating composition, particularly a coating composition for use in plastic lenses covered with a hard coat which can be dyed and has excellent hardness and to a coated plastic lens.

### Description of the Prior Art

A plastic lens which is a type of transparent substrate is superior to a glass lens in safety, processability, fasionability and light weight and is now becoming popular rapidly due to the development of hard coating and anti-reflection technologies for plastic lenses. To obtain colored plastic lenses, a hard coat layer is formed on a dyed lens, or a plastic lens having a hard coat layer which can transmit a dye is dyed. In the latter case, there is known a coating composition for a hard coat which can transmit a dye (refer to JP-A 58-80359 and JP-A 7-278496) (the term "JP-A" as used herein means an "unexamined published Japanese patent application"). JP-A 58-80359 discloses a coating composition which comprises colloidal silica, epoxysilane, crosslinking agent and curing catalyst. JP-A 7-278496 discloses a coating composition which comprises colloidal silica, epoxysilane and 4-hydroxybutyl acrylate (or diethylene glycol monoacrylate) as main ingredients.

However, though hard coats obtained by the above prior arts have high hardness before they are dyed, they deteriorate in hardness after they are dyed. When a plastic lens covered with a hard coat is kept in a paper bag for several months before it is dyed, a dyeing speck is seen or the color of a dye greatly changes before and after storage.

### Summary of the Invention

It is an object of the present invention to provide a coating composition for forming a hard coat layer which is free from a dyeing speck even when it is dyed after it is stored for a long period of time, experiences a small change in the color of a dye before and after storage, can be dyed and has high hardness as well as a coated plastic lens.

Other objects and advantages of the present invention will become apparent from the following description.

According to the present invention, firstly, the above objects and advantages of the present invention are attained by a coating composition comprising:

(A) 0.05 to 7 % by mass of a fluoro group-containing silicon compound represented by the following formula (1) or a hydrolysate thereof:

$$Rf\text{-}(CH_2)_a\text{-}X\text{-}(CH_2)_b\text{-}\underset{\substack{|\\ R^2_c}}{Si}(OR^1)_{3-c} \qquad \cdots(1)$$

wherein Rf is a perfluoroalkyl group or hydroperfluoroalkyl group which has 1 to 20 carbon atoms, is linear or branched and may be interrupted by oxygen, $R^1$ is a hydrogen atom, alkyl group having 1 to 10 carbon atoms or acyl group having 1 to 10 carbon atoms, $R^2$ is an alkyl group having 1 to 6 carbon atoms, X is $-CH_2-$, $-CH_2O-$, $-NR^3-$, $-COO-$, $-CONR^3-$, $-S-$, $-SO_3-$ or $-SO_2NR^3-$, $R^3$ is a hydrogen atom or alkyl group having 1 to 8 carbon atoms, a is 0, 1, 2 or 3, b is 1, 2 or 3, and c is 0, 1 or 2,

(B) 5 to 65 % by mass of fine particles of the oxide of at least one metal selected from the group consisting of Si, Al, Sn, Sb, Ta, Ce, La, Fe, Zn, W, Zr, In and Ti,

(C) 10 to 80 % by mass of a silicon compound represented by the following formula (2):

$$R^4R^5{}_dSi(OR^6)_{3-d} \qquad (2)$$

wherein $R^4$ is an organic group having an epoxy group and 2 to 12 carbon atoms, $R^5$ is an alkyl group having 1 to 8 carbon atoms, aryl group having 6 to 8 carbon atoms, alkenyl group having 1 to 8 carbon atoms or acyl group having 1 to 8 carbon atoms, $R^6$ is a hydrogen atom, alkyl group having 1 to 10 carbon atoms or acyl group having 1 to 10 carbon atoms, and d is 0, 1 or 2,

or a silicon compound represented by the following formula (3):

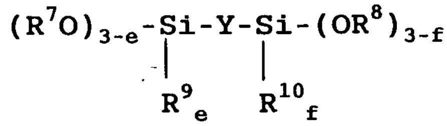 ···(3)

wherein $R^7$ and $R^8$ are each independently an alkyl group having 1 to 4 carbon atoms or acyl group having 1 to 4 carbon atoms, $R^9$ and $R^{10}$ are each independently a hydrocarbon group having 1 to 6 carbon atoms, Y is a divalent hydrocarbon group having 1 to 20 carbon atoms, organic group having 1 to 20 carbon atoms and a carbonate group or organic group having 1 to 20 carbon atoms and an epoxy group, e is 0 or 1, and f is 0 or 1,
or a partial hydrolysate thereof,
(D) 0.1 to 60 % by mass of a compound which is reactive with an epoxy group or a silanol group, wherein
the amount of the component (A) is based on the mass of the component (C), and each of the amounts of the components (B), (C) and (D) are based on the total mass of the components (A), (B), (C) and (D).

According to the present invention, secondly, the above objects and advantages of the present invention are attained by a coated plastic lens which comprises a plastic lens substrate and the cured coating film of the above coating composition of the present invention formed on the substrate directly or through a primer layer and which has scratch resistance and is dyeable.

Detailed Description of the Preferred Embodiment

Each of the components contained in the coating composition of the present invention will be described in detail hereinunder.
The first component of the present invention is a fluoro group-containing silicon compound represented by the following formula (1) or a hydrolysate thereof (to be referred to as "component (A)" hereinafter):

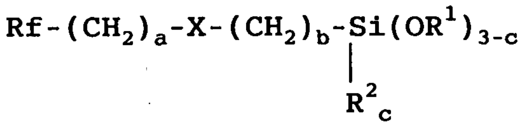 ···(1)

wherein Rf is a perfluoroalkyl group or hydroperfluoroalkyl group which has 1 to 20 carbon atoms, is linear or branched and may be interrupted by oxygen, $R^1$ is a hydrogen atom, alkyl group having 1 to 10 carbon atoms or acyl group having 1 to 10 carbon atoms, $R^2$ is an alkyl group having 1 to 6 carbon atoms, X is $-CH_2-$, $-CH_2O-$, $-NR^3-$, -COO-, $-CONR^3-$, -S-, $-SO_3-$ or $-SO_2NR^3-$, $R^3$ is a hydrogen atom or alkyl group having 1 to 8 carbon atoms, a is 0, 1, 2 or 3, b is 1, 2 or 3, and c is 0, 1 or 2.
In the above formula, Rf is preferably a perfluoroalkyl group represented by the following formula (4)-1:

$$C_yF_{2y+1} \qquad (4)\text{-}1$$

wherein y is an integer of 1 to 20,
or a perfluoroalkyl group which is interrupted by an oxygen atom and represented by the following formula (4)-2:

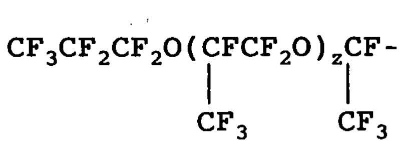 ···(4)-2

wherein z is an integer of 1 or more.
Examples of the perfluoroalkyl group represented by the above formula (4)-1 include $CF_3-$, $C_2F_5-$, $C_3F_7-$, $C_4F_9-$, $C_6F_{13}-$, $C_8F_{17}-$, $C_{10}F_{21}-$, $C_{12}F_{25}-$, $C_{14}F_{29}-$, $C_{16}F_{33}-$, $C_{18}F_{37}-$ and $C_{20}F_{41}-$.
The perfluoroalkyl group which is interrupted by oxygen and represented by the above formula (4)-2 is particularly preferably a perfluoroalkyl group of the above formula (4)-2 in which z is an integer of 1 to 10. Examples of

the perfluoroalkyl group include those represented by the following formulas (5) to (8).

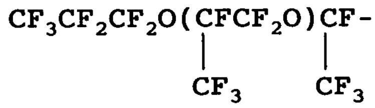 ···(5)

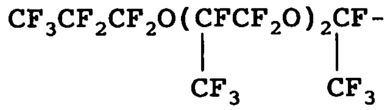 ···(6)

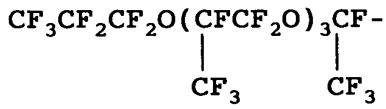 ···(7)

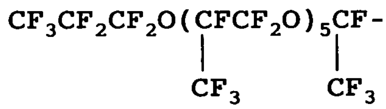 ···(8)

Examples of the fluoro group-containing silicon compound represented by the formula (1) include $Rf(CH_2)_2Si(OH)_3$, $Rf(CH_2)_2SiCH_3(OH)_2$, $Rf(CH_2)_2Si(OCH_3)(OH)_2$, $Rf(CH_2)_2Si(OC_2H_5)(OH)_2$, $Rf(CH_2)_2Si(CH_3)_2(OH)$, $Rf(CH_2)_2Si(OCH_3)_2(OH)$, $Rf(CH_2)_2Si(OC_2H_5)_2(OH)$, $Rf(CH_2)_2Si(CH_3)_3$, $Rf(CH_2)_2Si(OCH_3)_3$, $Rf(CH_2)_2Si(OC_2H_5)_3$, $RfNH(CH_2)_2Si(OH)_3$, $RfNH(CH_2)_2SiCH_3(OH)_2$, $RfNH(CH_2)_2Si(OCH_3)(OH)_2$, $RfNH(CH_2)_2Si(OC_2H_5)(OH)_2$, $RfNH(CH_2)_2Si(CH_3)_2(OH)$, $RfNH(CH_2)_2Si(OCH_3)_2$ (OH), $RfNH(CH_2)_2Si(OC_2H_5)_2(OH)$, $RfNH(CH_2)_2Si(CH_3)_3$, $RfNH(CH_2)_2Si(OCH_3)_3$, $RfNH(CH_2)_2Si(OC_2H_5)_3$, $RfCONH(CH_2)_2Si(OH)_3$, $RfCONH(CH_2)_2SiCH_3(OH)_2$, $RfCONH(CH_2)_2Si(OCH_3)(OH)_2$, $RfCONH(CH_2)_2Si(OC_2H_5)(OH)_2$, $RfCONH(CH_2)_2Si(CH_3)_2(OH)$, $RfCONH(CH_2)_2Si(CH_3)_2(OH)$, $RfCONH(CH_2)_2Si(OC_2H_5)_2(OH)$, $RfCONH(CH_2)_2Si(CH_3)_3$, $RfCONH(CH_2)_2Si(OCH_3)_3$, $RfCONH(CH_2)_2Si(OC_2H_5)_3$, $RfSO_2NH(CH_2)_2Si(OH)_3$, $RfSO_2NH(CH_2)_2SiCH_3(OH)_2$, $RfSO_2NH(CH_2)_2Si(OCH_3)(OH)_2$, $RfSO_2NH(CH_2)_2Si(OC_2H_5)(OH)_2$, $RfSO_2NH(CH_2)_2Si(CH_3)_2(OH)$, $RfSO_2NH(CH_2)_2Si(OCH_3)_2(OH)$, $RfSO_2NH(CH_2)_2Si(OC_2H_5)_2(OH)$, $RfSO_2NH(CH_2)_2Si(OCH_3)_3$ and $RfSO_2NH(CH_2)_2Si(OC_2H_5)_3$. The definition of Rf is the same as in the above formula (1). Out of these, perfluoroalkyl trialkoxysilanes and perfluoroalkyl (alkyl)dialkoxysilanes such as 3,3,3-trifluoropropyl triethoxysilane, heptadecafluorodecyl trimethoxysilane, heptadecafluorodecyl triethoxysilane, heptadecafluorodecylmethyl dimethoxysilane and heptadecafluorodecylmethyl diethoxysilane are particularly preferred. The fluoro group-containing silicon compound represented by the formula (1) may be used in the form of a hydrolysate (including a partial hydrolysate and a whole hydrolysate).

When a lens covered with a hard coat layer is dyed after it is kept in a paper bag for a long period of time, a dyeing speck is seen, or the color of a dye greatly changes before and after storage. However, when the component (A) is existent, the dyeing speck or the change in the color of a dye can be prevented. It seems that this is because the component (A) prevents a chemical substance contained in the paper bag from adsorbing to the surface of the hard coat layer. Further, the component (A) serves to provide slipperiness to the surface of the coating film and to prevent a reduction in film hardness after dyeing.

When the content of the component (A) is too low, the contact angle between water and the surface of the hard coat layer becomes small, thereby making it impossible to obtain the above effects and when the content is too high, it is difficult to apply a hard coating to the plastic lens substrate because the coating is repelled. The component (A) is used in an amount of preferably 0.05 to 7 % by mass, more preferably 0.3 to 4.0 % by mass based on the mass of the component (C).

The second component is fine particles of the oxide of at least one metal selected from the group consisting of Si, Al, Sn, Sb, Ta, Ce, La, Fe, Zn, W, Zr, In and Ti (to be referred to as "component (B)" hereinafter). These metal oxides are $SiO_2$, $Al_2O_3$, $SnO_2$, $Sb_2O_5$, $Ta_2O_5$, $CeO_2$, $La_2O_3$, $Fe_2O_3$, ZnO, $WO_3$, $ZrO_2$, $In_2O_3$ and $TiO_2$. The metal oxide

fine particles preferably have a particle diameter of 1 to 100 nm.

The above metal oxide fine particles are preferably dispersed in a solvent to a solid content of 10 to 50 % by mass. In order to improve dispersibility in a solvent, the metal oxide fine particles may be surface modified with an organic silane compound. The amount of the organic silane compound is 0 to 20 % by mass based on the mass of the fine particles. This surface modification is carried out by mixing an organic silane compound which is not hydrolyzed or hydrolyzed with the metal oxide fine particles and then heating or drying the mixture.

The used organic silicon compound is a monofunctional silane represented by $R_3SiX$ (R is an organic group having an alkyl group, phenyl group, vinyl group, methacryloxy group, mercapto group, amino group or epoxy group, and X is a hydrolyzable group), bifunctional silane represented by $R_2SiX_2$ (R and X are as defined in the above formula), trifunctional silane represented by $RSiX_3$ (R and X are as defined in the above formula) or tetrafunctional silane represented by $SiX_4$ (X is as defined in the above formula).

Examples of the above monofunctional silane include trimethylmethoxysilane, triethylmethoxysilane, trimethylethoxysilane, triethylethoxysilane, tripheylmethoxysilane, diphenylmethylmethoxysilane, phenyldimethylmethoxysilane, phenyldimethylethoxysilane, vinyldimethylmethoxysilane, vinyldimethylethoxysilane, γ-acryloxypropyldimethylmethoxysilane, γ-methacryloxypropyldimethylmethoxysilane, γ-mercaptopropyldimethylmethoxysilane, γ-mercaptopropyldimethylethoxysilane, N-β(aminoethyl)γ-aminopropyldimethylmethoxysilane, γ-aminopropyldimethylmethoxysilane, γ-aminopropyldimethylethoxysilane, γ-glycidoxypropyldimethylmethoxysilane, γ-glycidoxypropyldimethoxyethoxysilane and β-(3.4-epoxycyclohexyl)ethyldimethylmethoxysilane.

Examples of the above bifunctional silane include dimethyldimethoxysilane, diethyldimethoxysilane, dimethyldiethoxysilane, diethyldiethoxysilane, diphenyldimethoxysilane, phenylmethyldimethoxysilane, phenylmethyldiethoxysilane, vinylmethyldimethoxysilane, vinylmethyldiethoxysilane, γ-acryloxypropylmethyldimethoxysilane, γ-methacryloxypropyldimethyldimethoxysilane, γ-mercaptopropylmethyldimethoxysilane, γ-mercaptopropylmethyldiethoxysilane, N-β(aminoethyl)γ-aminopropylmethyldimethoxysilane, γ-aminopropylmethyldimethoxysilane, γ-aminopropylmethyldiethoxysilane, γ-glycidoxypropylmethyldimethoxysilane, γ-glycidoxypropylmethoxydiethoxysilane and β-(3.4-epoxycyclohexyl)ethylmethyldimethoxysilane.

Examples of the above trifunctional silane include methyltrimethoxysilane, ethyltrimethoxysilane, methyltriethoxysilane, ethyltriethoxysilane, phenyltrimethoxysilane, phenyltriethoxysilane, vinyltrimethoxysilane, vinyltriethoxysilane, vinyl(β-methoxyethoxy)silane, γ-acryloxypropyltrimethoxysilane, γ-methacryloxypropyltrimethoxysilane, γ-mercaptopropyltrimethoxysilane, γ-mercaptopropyltriethoxysilane, N-β(aminoethyl)γ-aminopropyltrimethoxysilane, γ-aminopropyltrimethoxysilane, γ-aminopropyltriethoxysilane, γ-glycidoxypropyltrimethoxysilane, β-glycidoxypropyltrimethoxysilane, γ-glycidoxypropyltriethoxysilane, β-glycidoxypropyltriethoxysilane and β-(3.4-epoxycyclohexyl)ethyltrimethoxysilane.

Examples of the above tetrafunctional silane include tetraethyl orthosilicate and tetramethyl orthosilicate.

Examples of the solvent for dispersing the metal oxide fine particles include water; saturated aliphatic alcohols such as methanol, ethanol, isopropyl alcohol, n-butanol and 2-butanol; cellosolves such as methyl cellosolve, ethyl cellosolve, propyl cellosolve and butyl cellosolve; propylene glycol derivatives such as propylene glycol monomethyl ether, propylene glycol monoethyl ether and propylene glycol monomethyl acetate; esters such as methyl acetate, ethyl acetate and butyl acetate; ethers such as diethyl ether and methyl isobutyl ether; ketones such as acetone and methyl isobutyl ketone; aromatic solvents such as xylene and toluene; and other organic solvents such as ethylene glycol, tetrahydrofuran, N,N-dimethylformamide and dichloroethane.

Commercially available products of the $SiO_2$ fine particles include Nalco1057 (of Nalco Co., Ltd., average particle size of 20 nm, solid content of 30 %, propoxy ethanol dispersion), Snowtex O-40 (of Nissan Chemical Industries, Ltd. , average particle size of 20 nm, water dispersion having a solid content of 40 %) and IPA-ST (of Nissan Chemical Industries, Ltd., average particle size of 20 nm, isopropyl alcohol dispersion having a solid content of 30 %).

The component (B) is used in an amount of 5 to 65 % by mass based on the total mass of the components (A), (B), (C) and (D) latter two of which will be described hereinafter. When the amount of the component (B) is smaller than 5 % by mass, the hardness of the obtained film lowers with the result of deteriorated abrasion resistance and when the amount is larger than 65 % by mass, the coating film becomes fragile and readily cracks.

The third component is a silicon compound represented by the following formula (2), silicon compound represented by the following formula (3) or partial hydrolysate thereof (to be referred to as "component (C)" hereinafter).

$$R^4R^5{}_dSi(OR^6)_{3-d} \qquad (2)$$

In the above formula, $R^4$ is an organic group having an epoxy group and 2 to 12 carbon atoms, $R^5$ is an alkyl group having 1 to 8 carbon toms, aryl group having 6 to 8 carbon atoms, alkenyl group having 1 to 8 carbon atoms or acyl group having 1 to 8 carbon atoms, $R^6$ is a hydrogen atom, alkyl group having 1 to 10 carbon atoms or acyl group having

1 to 10 carbon toms, and d is 0, 1 or 2. $R^5$ is preferably an alkyl group having 1 to 8 carbon atoms.

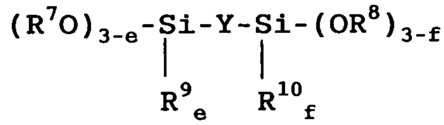 ···(3)

In the above formula, $R^7$ and $R^8$ are each independently an alkyl group having 1 to 4 carbon atoms or acyl group having 1 to 4 carbon atoms, $R^9$ and $R^{10}$ are each independently a hydrocarbon group having 1 to 6 carbon atoms, Y is a divalent hydrocarbon group having 1 to 20 carbon atoms, organic group having 1 to 20 carbon atoms and a carbonate group or organic group having 1 to 20 carbon atoms and an epoxy group, e is 0 or 1, and f is 0 or 1.

The silicon compound represented by the formula (3) can be synthesized by a conventionally known method. For instance, it can be obtained by carrying out an addition reaction between a diallyl carbonate and a trichlorosilane and then alkoxylating the reaction product. It also can be obtained by carrying out an addition reaction between a trichlorosilane and a compound having a substituent able to be added at both terminals and an epoxy group or a functional group able to be epoxylated in the substituent and alkoxylating the reaction product.

The component (C) is used in an amount of 10 to 80 % by mass, preferably 20 to 60 % by mass based on the total mass of the components (A), (B), (C) and (D) which will be described hereinafter. When the amount of the component (C) is smaller than 10 % by mass, the obtained film becomes fragile and readily cracks and when the amount is larger than 80 % by mass, the stability of the coating solution lowers.

Examples of the silicon compound represented by the above formula (2) include γ-glycidoxypropyltrimethoxysilane, β-glycidoxypropyltrimethoxysilane, γ-glycidoxypropyltriethoxysilane, β-glycidoxypropyltriethoxysilane, γ-glycidoxypropylmethyldimethoxysilane, γ-glycidoxypropylmethyldiethoxysilane and β-(3.4-epoxycyclohexyl)ethyltrimethoxysilane.

Examples of Y in the above formula (3) include $-CH_2CH_2OC(O)OCH_2CH_2-$, $-CH_2CH_2CH_2OC(O)OCH_2CH_2CH_2-$, $-CH_2CH_2OC(O)OCH_2CH_2OC(O)OCH_2CH_2-$, $-CH_2CH_2CH_2OC(O)OCH_2CH_2OC(O)OCH_2CH_2CH_2-$, $-CH_2CH_2OC(0) OCH_2CH_2OCH_2CH_2OC(0) OCH_2CH_2-$, $-CH_2CH_2CH_2OC(0) OCH_2CH_2OCH_2CH_2OC(0) OCH_2CH_2CH_2$

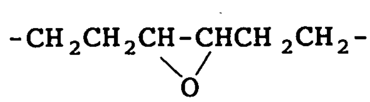 ,

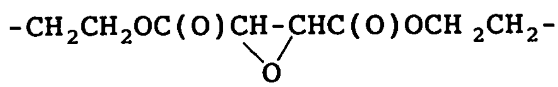 ,

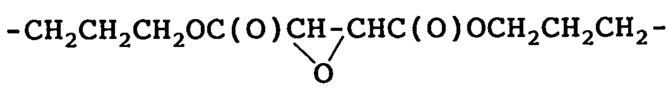

and

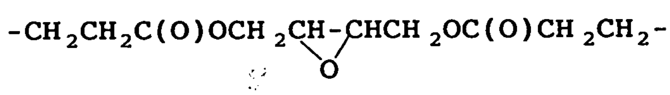 .

The component (D) is a compound which can react with an epoxy group or a silanol group. The epoxy group is contained in the formula (2) or the formula (3) of the component (C) and the silanol group is formed after the silicon compound as the component (C) is hydrolyzed. The component (D) serves to provide dye permeability to the film. The component (D) may further serve to improve the physical properties such as heat resistance, water resistance, antistatic properties and surface hardness of the film or to assist in the catalytic function for the reaction of the coating solution.

The component (D) is used in an amount of 0.1 to 60 % by mass, preferably 1.0 to 40 % by mass based on the total mass of the components (A), (B), (C) and (D). When the amount of the component (C) is smaller than 0.1 % by mass, it cannot provide dye permeability to the film and when the amount is larger than 60 % by mass, the hardness of the obtained film lowers with the result of deteriorated abrasion resistance.
Examples of the compound (D) include the following compounds (D-1) to (D-10).
The component (D-1) is an organic compound which has only one OH group or SH group and at least one unsaturated group in the molecule and at least one of -O-, -CO-O-, -S-, -CO-S- and -CS-S- in the molecular main chain and is soluble in water or a lower alcohol having 1 to 4 carbon atoms. Examples of the component (D-1) include polyethylene glycol monomethacrylate, poly(butanediol)monoacrylate, poly(butanediol)monomethacrylate, 1,4-butanediol monovinyl ether, 1,6-hexanedithiol monoacrylate, di(acryloxyethyl)hydroxyethylamine, 2-hydroxy-3-phenoxypropyl acrylate, pentaerythritol triacrylate, 2-hydroxybutyl acrylate, 3-acryloyloxyglycerine monomethacrylate and 2-hydroxy-1,3-dimethacryloxypropane.
Preferred examples of the component (D-1) are compounds represented by the following formulas (9), (10), (11) and (12).

$$CH_2=C(R^{15})CO-O(CH_2)_p-OH \qquad (9)$$

In the above formula (9), $R^{15}$ is a hydrogen atom or methyl group, and p is an integer of 2 to 10, preferably 4 to 6.

$$CH_2=C(R^{11})CO-(O-R^{12})_g-OH \qquad (10)$$

In the above formula (10), $R^{11}$ is a hydrogen atom or methyl group, $R^{12}$ is $-CH_2CH_2-$, $-CH_2CH(CH_3)-$ or $-CH(CH_3)CH_2-$, and g is an integer of 2 to 9, preferably 2 to 4.

$$CH_2=CH-(CH_2)_h-O-(CH_2)_j-OH \qquad (11)$$

In the above formula (11), j is an integer of 2 to 10, and h is 0 or 1.

$$CH_2=CH-(CH_2)_h-(O-R^{12})_j-OH \qquad (12)$$

In the above formula (12), $R^{12}$ is $-CH_2CH_2-$, $-CH_2CH(CH_3)-$ or $-CH(CH_3)CH_2-$, j is an integer of 2 to 9, and h is 0 or 1.
The compounds represented by the above formula (9) include 4-hydroxybutyl acrylate and 4-hydroxybutyl methacrylate.
The compounds represented by the above formula (10) include diethylene glycol monoacrylate, tetraethylene glycol monoacrylate, polyethylene glycol monoacrylate, tripropylene glycol monoacrylate, polypropylene glycol monoacrylate, diethylene glycol monomethacrylate, tetraethylene glycol monomethacrylate, polyethylene glycol monomethacrylate, tripropylene glycol monomethacrylate and polypropylene glycol monomethacrylate.
The compounds represented by the above formula (11) include 4-hydroxybutylallyl ether and 4-hydroxybutylvinyl ether.
The compounds represented by the above formula (12) include diethylene glycol monoallyl ether and triethylene glycol monovinyl ether.
The component (D-2) is an organic compound which has at least two OH groups or at least one SH group and at least one unsaturated group in the molecule and is soluble in water or a lower alcohol having 1 to 4 carbon atoms. The component (D-2) is, for example, a compound which comprises an epoxy compound and methacrylic acid. Commercially available products of the component (D-2) include Epoxy Ester 70PA, Epoxy Ester 200PA, Epoxy Ester 80MFA and Epoxy Ester 3002M manufactured by Kyoeisha Kagaku Co., Ltd.
The component (D-3) is an unsaturated dibacic acid, or cyclic anhydride or imide compound thereof. Examples of the unsaturated dibasic acid include itaconic acid, succinic acid, malonic acid, glutaric acid, adipic acid, pimelic acid, suberic acid, azelaic acid, sebacic acid, fumaric acid and maleic acid. Examples of the cyclic anhydride of an unsaturated dibasic acid include succinic anhydride, glutaric anhydride, trimellitic anhydride, pyromellitic anhydride, phthalic anhydride and maleic anhydride.
Examples of the imide compound of an unsaturated dibasic acid include succinic acid imide, glutaric acid imide, phthalic acid imide and maleic acid imide.

The component (D-4) is a saturated polycarboxylic acid, or cyclic anhydride or imide compound thereof. Examples of the saturated polycarboxylic acid include adipic acid and suberic acid. Examples of the cyclic anhydride of a saturated polycarboxylic acid include adipic anhydride.

Examples of the imide compound of a saturated polycarboxylic acid include adipic acid imide.

The component (D-5) is an amine. Examples of the component (D-5) include amines such as polymethylenediamine, polyetherdiamine, diethylenetriamine, iminobispropylamine, bishexamethylenetriamine, diethylenetriamine, tetraethylenepentaamine, pentaethylenehexaamine, dimethylaminopropylamine, aminoethylethanolamine, methyliminobispropylamine, menthanediamine, N-aminomethylpiperazine, 1,3-diaminocyclohexane, isophoronediamine, metaxylenediamine, tetrachloroparaxylenediamine, metaphenylenediamine, 4,4'-methylenedianiline, diaminodiphenylsulfone, benzidine, toluidine, diaminodiphenyl ether, 4,4'-thiodianiline, 4,4'-bis(o-toluidine)dianisidine, o-phenylenediamine, 2,4-toluenediamine, methylenebis(o-chloroaniline), diaminiditolylsulfone, bis(3,4-diaminophenyl)sulfone, 2,6-diaminopyridine, 4-chloro-o-phenylenediamine, 4-methoxy-6-methyl-m-phenylenediamine, m-aminobenzylamine, N,N,N',N'-tetramethyl-1,3-butanediamine, N,N,N',N'-tetramethyl-p-phenylenediamine, tetramethylguanidine, triethanolamine, 2-dimethylamino-2-hydroxypropane, N,N'-dimethylpiperazine, N,N'-bis[(2-hydroxy)propyl]piperazine, N-methylformolin, hexamethylenetetramine, pyridine, pyrazine, quinoline, benzyldimethylamine, α-methylbenzylmethylamine, 2-(dimethylaminomethyl)phenol, 2,4,6-tris(dimethylaminomethylol)phenol, N-methylpiperazine and pyrrolidine and formolin, and adducts and condensates of the above amines with an organic carboxylic acid, cyclic ether, ketone, aldehyde or hydroquinone.

The component (D-6) is urea or formaldehyde adduct thereof.

The component (D-7) is an alkyl-substituted methylol melamine.

The component (D-8) is a compound having at least two OH groups or SH groups.

Examples of the component (D-8) include 1,4-butanediol, 1,6-hexanediol, 1,9-nonanediol, 1,10-decanediol, ethylene glycol, diethylene glycol, triethylene glycol, tetraethylene glycol, polyethylene glycol, propylene glycol, tripropylene glycol, polypropylene glycol, trimethylolpropane, neopentyl glycol, catechol, resorcinol, alkylene glycol, polyvinyl alcohol, polycaprolactone diol, polycaprolactone triol and polycaprolactone tetraol.

The component (D-9) is a compound having at least two epoxy groups. Examples of the component (D-9) include glycidyl ethers of a polyhydric alcohol as the above component (D-8).

The component (D-10) is dicyandiamide, hydrazide, thiourea, guanidine, ethyleneimine, sulfonamide or derivative thereof.

The coating composition of the present invention may contain a compound represented by the following formula (13) (to be referred to as "component (E)" hereinafter) as an optional component in addition to the above components (A) to (D).

$$R^{13}{}_kR^{14}{}_mSi(OR^1)_{4-k-m} \qquad (13)$$

In the above formula (13), $R^1$ is a hydrogen atom, alkyl group having 1 to 10 carbon atoms or acyl group having 1 to 10 carbon atoms, $R^{14}$ is an alkyl group having 1 to 6 carbon atoms, $R^{13}$ is an alkyl group or haloalkyl group having 1 to 10 carbon atoms, aryl group or haloaryl group having 6 to 12 carbon atoms, alkenyl group, methacryloxyalkyl group having 5 to 8 carbon atoms, or ureidoalkylene group, aromatic ureidoalkylene group, halogenated aromatic alkylene group or mercaptoalkylene group having 2 to 10 carbon atoms, k is 1, 2 or 3, and m is 0, 1 or 2.

The component (E) serves to adjust dye permeability, change the color of a dye and improve the physical properties such as heat resistance, water resistance, antistatic properties and surface hardness of a film. Examples of the component (E) include monoalkoxysilanes such as trimethylmethoxysilane, triethylmethoxysilane, trimethylethoxysilane, triethylethoxysilane, triphenylmethoxysilane, diphenylmethylmethoxysilane, phenyldimethylmethoxysilane, phenyldimethylethoxysilane, vinyldimethylmethoxysilane, vinyldimethylethoxysilane, γ-acryloxypropyldimethylmethoxysilane, γ-methacryloxypropyldimethylmethoxysilane, γ-mercaptopropyldimethylmethoxysilane, γ-mercaptopropyldimethylethoxysilane, N-β(aminoethyl)γ-aminopropyldimethylmethoxysilane, γ-aminopropyldimethylmethoxysilane, γ-aminopropyldimethylethoxysilane, γ-glycidoxypropyldimethylmethoxysilane, γ-glycidoxypropyldimethoxyethoxysilane and β-(3.4-epoxycyclohexyl)ethyldimethylmethoxysilane; dialkoxysilanes such as dimethyldimethoxysilane, diethyldimethoxysilane, dimethyldiethoxysilane, diethyldiethoxysilane, diphenyldimethoxysilane, phenylmethyldimethoxysilane, phenylmethyldiethoxysilane, vinylmethyldimethoxysilane, vinylmethyldiethoxysilane, γ-acryloxypropylmethyldimethoxysilane, γ-methacryloxypropyldimethyldimethoxysilane, γ-mercaptopropylmethyldimethoxysilane, γ-mercaptopropylmethyldiethoxysilane, N-β(aminoethyl)γ-aminopropylmethyldimethoxysilane, γ-aminopropylmethyldimethoxysilane, γ-aminopropylmethyldiethoxysilane, γ-glycidoxypropylmethyldimethoxysilane, γ-glycidoxypropylmethoxydiethoxysilane and β-(3.4-epoxycyclohexyl)ethylmethyldimethoxysilane; trialkoxysilanes such as methyltrimethoxysilane, ethyltrimethoxysilane, methyltriethoxysilane, ethyltriethoxysilane, phenyltrimethoxysilane, phenyltriethoxysilane, vinyltrimethoxysilane, vinyltriethoxysilane, vinyl(β-methoxyethoxy)silane, γ-acryloxypropyltrimethoxysilane, γ-methacryloxypropyltrimethoxysilane, γ-mercaptopropyltrimethoxysilane, γ-mercaptopropyltriethoxysilane, N-β(aminoethyl)γ-aminopropyltrimethoxysilane, γ-aminopropyltrimethoxysilane, γ-aminopropyltriethoxysilane, γ-glycidoxypropyltrimethoxysilane, β-glycidoxypropyltrimethoxysilane, γ-glycidoxypropyltriethoxysilane, β-glycidoxypropyltriethoxysilane and β-(3.4-epoxycyclohexyl)ethyltrimethoxysilane; and tetraalkoxysilanes such as tetraethyl orthosilicate and tetramethyl orthosilicate.

The component (E) is used in an amount of 0 to 40 % by mass based on the total mass of the components (A), (B), (C) and (D). It is preferably used in an amount of 1.0 to 40 % by mass. When the amount of the component (E) is larger than 40 % by mass, the hardness of the obtained film lowers.

The coating composition of the present invention may further contain a solvent as required. The solvent is preferably an alcohol, glycol, aliphatic cyclic ketone or acetic acid ester. Examples of the alcohol include methanol, ethanol, 1-propanol, 2-propanol and 1-methoxy-2-propanol. Examples of the glycol include ethylene glycol monomethyl ether acetate, ethylene glycol monoethyl ether acetate, ethylene glycol monopropyl ether acetate, ethylene glycol monobutyl ether acetate, propylene glycol monomethyl ether acetate, propylene glycol monoethyl ether acetate, propylene glycol monopropyl ether acetate, propylene glycol monobutyl ether acetate, ethylene glycol dimethyl ether, ethylene glycol diethyl ether, ethylene glycol dipropyl ether, ethylene glycol dibutyl ether, diethylene glycol dimethyl ether, diethylene glycol diethyl ether, diethylene glycol dipropyl ether, diethylene glycol dibutyl ether, propylene glycol dimethyl ether, propylene glycol diethyl ether, propylene glycol monomethyl ether, ethylene glycol monoethyl ether and ethylene glycol monobutyl ether. Examples of the aliphatic cyclic ketone include cyclohexanone, o-methylcyclohexanone, m-methylcyclohexanone and p-methylcyclohexanone. Examples of the acetic acid ester include ethyl acetate, n-propyl acetate and n-butyl acetate. Sorbent naphtha and methyl ethyl ketone may also be used.

The coating composition of the present invention contains water required for the hydrolysis of the components (A) and (C). Water is preferably contained in an amount 1.0 to 10 times larger than the theoretical amount required for hydrolysis.

The coating composition of the present invention contains a curing catalyst as required. Examples of the curing catalyst include alkali metal salts and ammonium salts of a carboxylic acid such as sodium acetate, metal salts and ammonium salts of acetylacetone, metal salts of ethyl acetoacetate, metal salts to which acetylacetone and ethyl acetoacetate are coordinately bonded, primary to tertiary amines, polyalkyleneamines, sulfonates, organic metal salts such as magnesium perchlorate, ammonium perchlorate, zinc naphthenate and tin octylate, and Lewis acids such as $SnCl_4$, $TiCl_4$ and $ZnCl_2$. These compounds may be used in combination with an organic mercaptane or mercaptoalkylene silane. The curing catalyst may be added at the time of preparing a mixture solution or right before the application of the coating. The curing catalyst is preferably used in an amount of 0.001 to 10 wt% based on total weight of the components (A), (C), (D) and (E) in the coating composition.

The coating composition of the present invention may further contain a leveling agent and a lubricity providing agent as required. Examples of these agents include a copolymer of polyoxyalkylene and polydimethylsiloxane and a copolymer of polyoxyalkylene and fluorocarbon. These agents may be contained in a total amount of 0.001 to 10 parts by weight based on the total weight of the solution. Other additives such as antioxidant, weatherability providing agent, antistatic agent, bluing agent and optical stabilizer may be added as required.

The coating composition of the present invention is prepared by aging preferably at room temperature for 10 to 100 hours after the above components are mixed together and stirred. The coating composition is applied to a plastic lens substrate by dip coating, flow coating, spinner coating or spray coating. The plastic lens substrate to which the coating composition has been applied by the above coating technique is heated at 60 to 120°C for 60 to 120 minutes to form a hard coat layer on the surface of the plastic lens substrate. When the thickness of the hard coat layer is too small, the obtained hardness lowers and when the thickness is too large, the hard coat layer easily cracks. Therefore, the hard coat layer is preferably as thick as 0.5 to 5 μm.

In order to improve the adhesion of the hard coat, the lens substrate may be subjected to a pre-treatment such as alkali treatment, acid treatment, plasma treatment, corona treatment or flame treatment.

To improve the adhesion of the hard coat and the impact resistance of the plastic lens, a primer layer may be formed between the hard coat layer and the plastic lens substrate. The primer layer may be made of a urethane resin. It is preferably a urethane resin primer layer, particularly preferably a primer layer formed by applying a primer layer composition comprising a polyol and polyisocyanate as main components and curing it. A preferred example of the primer composition is a composition which comprises a block polyisocyanate, a polyol, fine particles of the oxide of at least one metal selected from Al, Ti, Zr, Sn and Sb and a solvent. The fine particles have an average diameter of 1 to 300 mμ and are contained in the primer layer in an amount of 20 to 60 wt% to ensure that the refractive index of the primer layer is 1.45 to 1.60, the ratio of the block polyisocyanate to the polyol is 0.8 to 1.25 in terms of the molar ratio of the isocyanate group to the hydroxyl group, and the block polyisocyanate is obtained by blocking a cyclic trimer of hexamethylene diisocyanate with β-diketone.

The plastic lens substrate to which the coating of the present invention is to be applied is a transparent plastic

comprising various synthetic resins such as polyurethane resin, (meth)acrylic polymer such as polymethyl methacrylate (PMMA), allyl-based polymer, diethylene glycol bisallyl carbonate or polycarbonate.

Examples

The following two plastic lens substrates were prepared.
Lens substrate 1: plastic spectacle lens substrate made of diethylene glycol bisallyl carbonate. This was obtained by molding and thermally curing the CR-39 monomer manufactured by PPG Co., Ltd. (refractive index of 1.50).
Lens substrate 2: plastic spectacle lens substrate made of thiourethane resin. This was obtained by molding and thermally curing the MR-7 monomer manufactured by Mitsui Chemicals Ltd. (refractive index of 1.66).

Preparation of hard coating solutions 1 to 10

Hard coating solution 1

319 g of $SiO_2$ sol (water dispersion, average particle diameter of 10 nm, nonvolatile content of 40 %, pH = 3) was weighed and collected, 134 g of γ-glycidoxypropyltrimethoxysilane and 3 g of heptadecafluorodecyl trimethoxysilane (KBM-7803, manufactured by Shin-Etsu Chemical Co., Ltd.) were gradually added to the above sol under agitation and cooling, and the resulting mixture was stirred for 1 hour after addition. Thereafter, 505 g of 1-methoxy-2-propanol and 30 g of cis-hexahydrophthalic acid were added, stirred and dissolved to prepare a homogeneous solution. After 4 g of the Adecastab LA-77 (of Asahi Denka Kogyo K.K.) as an optical stabilizer was added, stirred and dissolved, 0.4 g of the Peintad 57 (silicone surfactant, manufactured by Dow Coning Co. , Ltd.) as a leveling agent was further added and stirred for 1 hour. The above mixture solution was aged at 20° C for 48 hours to obtain a hard coating solution 1.

Hard coating solution 2

A hard coating solution 2 was prepared in the same manner as the hard coating solution 1 except that the fluoroalkylsilane used for the preparation of the above hard coating solution 1 was not added.

Hard coating solution 3

319 g of $SiO_2$ sol (water dispersion, average particle diameter of 10 nm, nonvolatile content of 40 %, pH = 3) was weighed and collected, 34 g of methyltrimethoxysilane, 112 g of γ-glycidoxypropyltrimethoxysilane and 4 g of tridecafluorooctyl trimethylsilane (TSL8257, manufactured by GE Toshiba Silicone Co., Ltd.) were gradually added to the above sol under agitation and cooling, and the resulting mixture was stirred for 1 hour after addition. Thereafter, 249 g of 1-methoxy-2-propanol and 249 g of ethanol were added, and 28 g of malonic acid were further added and stirred and dissolved to prepare a homogeneous solution. After 5 g of the Tinubin 292 (of Chiba Specialty Chemicals Co., Ltd.) as an optical stabilizer was added, stirred and dissolved, 0.4 g of the L-7001 (silicone surfactant, manufactured by Nippon Unicar Co., Ltd.) as a leveling agent was further added and stirred for 1 hour. The above mixture solution was aged at 20°C for 48 hours to obtain a hard coating solution 3.

Hard coating 4

A hard coating solution 4 was prepared in the same manner as the hard coating solution 3 except that the fluoroalkylsilane used for the preparation of the above hard coating solution 3 was not added.

Hard coating solution 5

266 g of $SiO_2$ sol (water dispersion, average particle diameter of 10 nm, nonvolatile content of 40 %, pH = 3) was weighed and collected, 146 g of γ-glycidoxypropyltrimethoxysilane and 2 g of heptadecafluorodecylmethyldimethoxysilane (TSL8231, manufactured by GE Toshiba Silicone Co. , Ltd.) were gradually added to the above sol under agitation and cooling, and the resulting mixture was stirred for 1 hour after addition. After 433 g of 2-propanol and 108 g of 1-methoxy-2-propanol were added and 38 g of the Epoxy Ester 70PA (of Kyoeisha Kagaku Co., Ltd.) was further added, stirred and dissolved, 7 g of acetylacetone aluminum as a curing catalyst was added, stirred and dissolved. Further, 0.4 g of the FZ-2118 (silicone surfactant, manufactured by Nippon Unicar Co., Ltd.) as a leveling agent was added and stirred for 1 hour. The above mixture solution was aged at 20° C for 48 hours to obtain a hard coating solution 5.

Hard coating solution 6

A hard coating solution 6 was prepared in the same manner as the hard coating solution 5 except that the fluoroalkylsilane used for the preparation of the above hard coating solution 5 was not added.

Hard coating solution 7

325 g of composite oxide sol 1 comprising $TiO_2$, $ZrO_2$ and $SiO_2$ (methanol dispersion, average particle diameter of 10 nm, $TiO_2$:$ZrO_2$:$SiO_2$ = 78.5:1.5:19.0 (weight ratio), nonvolatile content of 30 %) was weighed and collected. 120 g of distilled water was added to the above sol under agitation. 163 g of γ-glycidoxypropyltrimethoxysilane and 4 g of heptadecafluorodecyltriethoxysilane (AY43-158E, manufactured by Toray Dow Corning Co., Ltd.) were gradually added. After the end of addition, the obtained mixture was stirred for another 2 hours. Thereafter, 350 g of 1-methoxy-2-propanol was added and then 33 g of tetraethylene glycol monomethacrylate ester was further added to the mixture solution under agitation. 5 g of acetylacetone aluminum as a curing catalyst and 0.4 g of the FZ-2104 (silicone surfactant, manufactured by Nippon Unicar Co., Ltd.) as a leveling agent were added and stirred for 1 hour. The above mixture solution was aged at 20° C for 48 hours to obtain a hard coating solution 7.

Hard coating solution 8

A hard coating solution 8 was prepared in the same manner as the hard coating solution 7 except that the fluoroalkylsilane used for the preparation of the above hard coating solution 7 was not added.

Hard coating solution 9

A hard coating solution 5 was prepared in the same manner as the hard coating solution 7 except that 98 g of γ-glycidoxypropyltrimethoxysilane and 75 g of a compound of the above formula (3) in which Y is $-C_2H_4OC(O)OC_2H_4-$, $R^7$ and $R^8$ are ethyl groups, $R^9$ and $R^{10}$ are methyl groups, and e = f = 1 were added in place of 163 g of γ-glycidoxypropyltrimethoxysilane used for the preparation of the hard coating solution 7.

Hard coating solution 10

A hard coating solution 10 was prepared in the same manner as the hard coating solution 9 except that the fluoroalkylsilane used for the preparation of the above hard coating solution 9 was not added.

Preparation of primer

64 g of a polyester polyol comprising isophthalic acid and 1,6-hexariediol and having an average molecular weight of 940 and a hydroxyl group value of 120 mgKOH/g, 65 g of a butyl acetate solution containing 75 wt% of a trimer of 1,6-hexanediol diisocyanate blocked with β-diketone and 870 g of propylene glycol monomethyl ether were mixed together and 0.5 g of the FZ-2164 of Nippon Unicar Co., Ltd. as a leveling agent was added to the above mixture solution and stirred to obtain a primer solution 1.

Examples 1 to 6 and Comparative Examples 1 to 6

Application and curing of hard coating solution

As shown in Tables 1 and 2, the lens substrate 1 or 2 was immersed in each of the hard coating solutions 1 to 10, pulled up at a rate of 15 cm/min, dried at room temperature for about 15 minutes and heated at 120° C for 1 hour to cure the coating film. After curing, all the films were as thick as about 2 µm.

Application and curing of primer coating solution

As for Example 6 and Comparative Example 6, before the application and curing of the hard coating solution, the lens substrate was immersed in the primer solution 1, pulled up at a rate of 10 cm/min, dried at room temperature for about 10 minutes and heated at 95° C for 30 minutes to cure a primer coat layer. After curing, all the films were as thick as about 1 µm.

The lenses covered with a hard coat layer were measured for adhesion, film hardness and contact angle before and after a dyeing test as follows (Examples 1 to 6 and Comparative Examples 1 to 6). The visible light transmittance, a* and b* in the color specification system and dyeing speck of each of the lenses which were dyed right after the formation of a hard coat layer and the lenses which were dyed after they were covered with a hard coat layer and then stored for 3 months were measured as follows (Examples 1 to 4 and Comparative Examples 1 to 4).

Measurement of adhesion:

A cross hatch test was conducted based on the JISK5600 cross cut adhesion test. That is, 11 vertical and horizontal parallel lines were formed on the surface of the film with a knife at intervals of 1 mm before and after a dyeing test which will be described hereinafter to form 100 squares, and a cellophane tape was affixed to the film and then removed. The number of squares adhering to the substrate and not removed from the substrate was counted and expressed by %.

Measurement of film hardness:

The surface of a hard coat was rubbed with #0000 steel wool 10 times under a load of 1 kg to observe a scratch on the surface. The film hardnesses before and after a dyeing test were measured by observing the surface of the film based on the following criteria.

5: film is not scratched at all
4: film is slightly scratched
3: film is scratched
2: film is badly scratched
1: even substrate is scratched

measurement of contact angle:

The static contact angle between 0.1 cc of a water drop and each lens sample before and after a dyeing test which will be described hereinafter was measured with a contact angle meter (CA-DT of Kyowa Kaimen Kagaku Co., Ltd.).

dyeing test:

80 g of the BPI Gray dye was dissolved in 800 g of water to prepare a coloring solution, and each lens sample was immersed in the solution at 90° C for 10 minutes to be dyed. Lenses which were dyed right after a hard coating solution was applied and cured and lenses which were dyed after a hard coating solution was applied and cured and then the lenses were kept in a paper bag at room temperature for 3 months, taken out from the bag and rinsed in water were measured for visible light transmittance (%), a* and b* values in the L*a*b* color specification system and dyeing speck. The difference in the color of the dye calculated from $a^*_1$ and $b^*_1$ values at the time of dyeing right after the application and curing of a hard coating solution and $a^*_2$ and $b^*_2$ values at the time of dyeing after 3 months of storage based on the expression $\sqrt{((a^*_2 - a^*_1)^2 + (b^*_2 - b^*_1)^2)}$ is given in the tables below.

The existence of a dyeing speck was judged by checking visually whether each lens was dyed uniformly or not or if a dyeing speck was seen.

These test and measurement results are shown in Table 1 and Table 2. In Table 1, Example 1 is superior in film hardness and adhesion before dyeing and maintains excellent film hardness and adhesion even after dyeing. In contrast to this, in Comparative Example 1, the film hardness lowered after dyeing. The difference between the color of the dye right after the application of a hard coating solution and the color of the dye after 3 months of storage is small at 0.02 in Example 1 but large at 0.98 in Comparative Example 1.

In Table 2, Examples 2 to 6 are superior in film hardness and adhesion before dyeing and maintain excellent film hardness and adhesion even after dyeing. In contrast to this, in Comparative Examples 2 to 6, the film hardness lowered after dyeing. As shown in Table 3, the difference between the color of the dye right after the application of a hard coating solution and the color of the dye after 3 months of storage is 1.52, 0.80 or 3.65 in Examples 2 to 4, respectively. The difference is 1.71, 2.56 or 8.72 in Comparative Examples 2 to 4, respectively. In Examples 2 to 4, no irregular color was seen by dyeing right after the application and curing of a hard coating solution and dyeing after 3 months of storage. However, in Comparative Examples 3 and 4, an irregular color was seen by dyeing after 3 months of storage. In Examples 1 to 6, it was confirmed that the hard coat was hardly contaminated after dyeing.

Table 1

| | Example 1 | Comparative Example 1 |
|---|---|---|
| Hard coating solution No. | 1 | 2 |
| Primer solution No. | not used | not used |
| Type of lens substrate | 1 | 1 |
| Before dyeing | | |
| Film hardness | 5 | 5 |
| Adhesion | 100 | 100 |
| Contact angle | 106 | 45 |
| After dyeing | | |
| Film hardness | 5 | 4 |
| Adhesion | 100 | 100 |
| Contact angle | 106 | 42 |
| Right after application | | |
| Transmittance | 23 | 24 |
| a* | 4.88 | 6.55 |
| b* | -3.16 | -3.81 |
| Dyeing speck | not seen | not seen |
| After 3 months of storage | | |
| Transmittance | 24 | 22 |
| a* | 4.90 | 5.80 |
| b* | -3.17 | -3.08 |
| Dyeing speck | not seen | not seen |
| Difference in color | 0.02 | 0.98 |

Table 2

| | Hard coating solution No. | primer solution No. | type of lens substrate | before dyeing | | | after dyeing | | |
|---|---|---|---|---|---|---|---|---|---|
| | | | | Film hardness | adhesion | contact angle | Film hardness | adhesion | contact angle |
| Ex.2 | 3 | not used | 1 | 5 | 100 | 105 | 5 | 100 | 105 |
| C.Ex.2 | 4 | not used | 1 | 5 | 100 | 53 | 4 | 100 | 50 |
| Ex.3 | 5 | not used | 1 | 5 | 100 | 108 | 5 | 100 | 107 |
| C.Ex.3 | 6 | not used | 1 | 5 | 100 | 76 | 4 | 100 | 73 |
| Ex.4 | 7 | not used | 2 | 5 | 100 | 105 | 5 | 100 | 104 |
| C.Ex.4 | 8 | not used | 2 | 5 | 100 | 75 | 4 | 100 | 74 |
| Ex.5 | 9 | not used | 2 | 5 | 100 | 104 | 5 | 100 | 104 |
| C.Ex.5 | 10 | not used | 2 | 5 | 100 | 72 | 4 | 100 | 70 |
| Ex.6 | 7 | 1 | 2 | 5 | 100 | 105 | 5 | 100 | 103 |
| C.Ex.6 | 8 | 1 | 2 | 5 | 100 | 75 | 4 | 100 | 74 |

Ex. : Example
C.Ex.: Comparative Example

Table 3

| | Right after application | | | | After 3 months of storage | | | | difference in color |
|---|---|---|---|---|---|---|---|---|---|
| | Transmittance | dyeing speck | a* | b* | Transmittance | dyeing speck | a* | b* | |
| Ex. 2 | 37 | Not seen | 3.63 | -2.60 | 33 | Not seen | 3.59 | -3.12 | 0.52 |
| C.Ex.2 | 36 | Not seen | 3.72 | -2.26 | 32 | Not seen | 4.45 | -3.81 | 1.71 |
| Ex.3 | 25 | Not seen | 3.71 | -2.83 | 25 | Not seen | 4.18 | -3.48 | 0.80 |
| C.Ex.3 | 27 | Not seen | 3.74 | -2.72 | 28 | Seen | 5.38 | -4.69 | 2.56 |
| Ex.4 | 29 | Not seen | -3.31 | -15.68 | 22 | Not seen | -2.86 | -19.30 | 3.65 |
| C.Ex.4 | 28 | Not seen | -2.92 | -14.08 | 23 | Seen | -2.06 | -22.76 | 8.72 |

Ex. : Example

C.Ex.: Comparative Example

As described above, the plastic lens of the present invention is covered with a hard coat layer which can be dyed and has high hardness and excellent adhesion, is free from a dyeing speck even when it is dyed after it is stored for a long period of time and experiences a small change in the color of a dye before and after storage.

## Claims

**1.** A coating composition comprising:

(A) 0.05 to 7 % by mass of a fluoro group-containing silicon compound represented by the following formula (1) or a hydrolysate thereof:

$$Rf-(CH_2)_a-X-(CH_2)_b-\underset{\displaystyle R^2_c}{\underset{|}{Si}}(OR^1)_{3-c} \quad \cdots(1)$$

wherein Rf is a perf luoroalkyl group or hydroperf luoroalkyl group which has 1 to 20 carbon atoms, is linear or branched and may be interrupted by oxygen, $R^1$ is a hydrogen atom, alkyl group having 1 to 10 carbon atoms or acyl group having 1 to 10 carbon atoms, $R^2$ is an alkyl group having 1 to 6 carbon atoms, X is $-CH_2-$, $-CH_2O-$, $-NR^3-$, -COO-, $-CONR^3-$ , -S-, $-SO_3-$ or $-SO_2NR^3-$, $R^3$ is a hydrogen atom or alkyl group having 1 to 8 carbon atoms, a is 0, 1, 2 or 3, b is 1, 2 or 3, and c is 0, 1 or 2,
(B) 5 to 65 % by mass of fine particles of the oxide of at least one metal selected from the group consisting of Si, Al, Sn, Sb, Ta, Ce, La, Fe, Zn, W, Zr, In and Ti,
(C) 10 to 80 % by mass of a silicon compound represented by the following formula (2):

$$R^4R^5{}_dSi(OR^6)_{3-d} \qquad (2)$$

wherein $R^4$ is an organic group having an epoxy group and 2 to 12 carbon atoms, $R^5$ is an alkyl group having 1 to 8 carbon atoms, aryl group having 6 to 8 carbon atoms, alkenyl group having 1 to 8 carbon atoms or acyl group having 1 to 8 carbon atoms, $R^6$ is a hydrogen atom, alkyl group having 1 to 10 carbon atoms or acyl group having 1 to 10 carbon atoms, and d is 0, 1 or 2,
or a silicon compound represented by the following formula (3):

$$(R^7O)_{3-e}-\underset{\displaystyle R^9_e}{\underset{|}{Si}}-Y-\underset{\displaystyle R^{10}_f}{\underset{|}{Si}}-(OR^8)_{3-f} \quad \cdots(3)$$

wherein $R^7$ and $R^8$ are each independently an alkyl group having 1 to 4 carbon atoms or acyl group having 1 to 4 carbon atoms, $R^9$ and $R^{10}$ are each independently a hydrocarbon group having 1 to 6 carbon atoms, Y is a divalent hydrocarbon group having 1 to 20 carbon atoms, organic group having 1 to 20 carbon atoms and a carbonate group or organic group having 1 to 20 carbon atoms and an epoxy group, e is 0 or 1, and f is 0 or 1, or a partial hydrolysate thereof,
(D) 0.1 to 60 % by mass of a compound which is reactive with an epoxy group or a silanol group, wherein the amount of the component (A) is based on the mass of the component (C), and each of the amounts of the components (B), (C) and (D) are based on the total mass of the components (A), (B), (C) and (D).

**2.** The coating composition according to claim 1, wherein Rf in the formula (1) is a perfluoroalkyl group which is represented by the following formula (4)-1:

$$C_yF_{2y+1} \quad (4)\text{-}1$$

wherein y is an integer of 1 to 20, or a perfluoroalkyl group which is interrupted by an oxygen atom and represented by the following formula (4)-2:

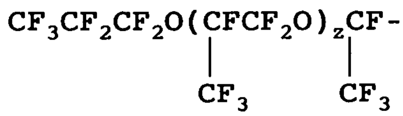
···(4)-2

wherein z is an integer of 1 or more.

**3.** The coating composition according to claim 1 or 2, wherein the component (D) is at least one compound selected from the group consisting of the following compounds (D-1) to (D-10):

(D-1) an organic compound which has only one OH group or SH group and at least one unsaturated group in the molecule and at least one group selected from the group consisting of -O-, -CO-O-, -S-, -CO-S- and -CS-S- in the molecular main chain, and is soluble in water or a lower alcohol having 1 to 4 carbon atoms;
(D-2) an organic compound which has at least two OH groups or at least one SH group and at least one unsaturated group in the molecule and is soluble in water or a lower alcohol having 1 to 4 carbon atoms;
(D-3) an unsaturated dibasic acid, or cyclic anhydride or imide compound thereof;
(D-4) a saturated polycarboxylic acid, or cyclic anhydride or imide compound thereof;
(D-5) an amine;
(D-6) urea or formaldehyde adduct thereof;
(D-7) an alkyl-substituted methylol melamine;
(D-8) a compound having at least two OH groups or SH groups;
(D-9) a compound having at least two epoxy groups; and
(D-10) dicyandiamide, hydrazide, thiourea, guanidine, ethyleneimine or sulfonamide, or derivative thereof.

**4.** A coated plastic lens which comprises a plastic lens substrate and the cured coating film of the coating composition of any one of claims 1 to 3 formed on the substrate directly or through a primer layer and which has scratch resistance and is dyeable.

## INTERNATIONAL SEARCH REPORT

International application No. PCT/JP03/15106

A. CLASSIFICATION OF SUBJECT MATTER
Int.Cl[7] C09D183/08, C09D183/06, C09D183/14, G02B1/10

According to International Patent Classification (IPC) or to both national classification and IPC

B. FIELDS SEARCHED
Minimum documentation searched (classification system followed by classification symbols)
Int.Cl[7] C09D183/00-183/16, G02B1/10, C08J7/04, C08L83/00-83/16

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | US 5314947 A (NIPPON ARC CO., LTD.), 24 May, 1994 (24.05.94), Claims & JP 4-213338 A | 1-4 |
| Y | JP 7-278496 A (NIPPON ARC CO., LTD.), 24 October, 1995 (24.10.95), Claims; Par. Nos. [0001], [0009] to [0017]; examples (Family: none) | 1-4 |
| Y | JP 7-179818 A (Mitsui Toatsu Chemicals, Inc.), 18 July, 1995 (18.07.95), Claims; Par. Nos. [0001], [0009]; examples (Family: none) | 1-4 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 February, 2004 (05.02.04) | 17 February, 2004 (17.02.04) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP03/15106

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-53806 A (Shin-Etsu Chemical Co., Ltd.), 19 February, 2002 (19.02.02), Claims; Par. Nos. [0001], [0031], [0044] to [0045], [0056]; examples (Family: none) | 1-4 |
| Y | JP 8-311391 A (Seiko Epson Corp.), 26 November, 1996 (26.11.96), Claims; Par. Nos. [0001], [0027] to [0028] (Family: none) | 1-4 |
| Y | JP 2-245078 A (Nikon Corp.), 28 September, 1990 (28.09.90), Claims; page 4, upper left column, 3rd line from the bottom to upper right column, line 12; lower right column, lines 2 to 8 (Family: none) | 1-4 |
| A | JP 63-21601 A (Toray Industries, Inc.), 29 January, 1988 (29.01.88), Claims; examples (Family: none) | 1-4 |

Form PCT/ISA/210 (continuation of second sheet) (July 1998)